# EUROPEAN PATENT APPLICATION

(11) **EP 2 615 747 A2**
(43) Date of publication of application: **17.07.2013**
(21) Application number: 12742367.1
(22) Date of filing: 11.04.2012
(51) Int. Cl.: H04B 10/08

(54) **RANGING METHOD FOR PASSIVE OPTICAL NETWORK, SYSTEM, AND DEVICE**

(71) Applicant: Huawei Technologies Co., Ltd., Shenzhen, Guangdong 518129 (CN)
(72) Inventor: LIANG, Xuanqin, Shenzhen Guangdong 518129 (CN)
(74) Representative: Pfenning, Meinig & Partner GbR
(86) International application number: PCT/CN2012/073780
(87) International publication number: WO 2012/103849

(57) **Abstract**

Embodiments of the present invention provide a ranging method for a passive optical network, including: allocating ranging bandwidth to at least two optical network terminals ONTs and providing ranging bandwidth information for the at least two ONTs by using a same downlink frame; opening a quiet window for suspending uplink sending of other ONTs in a ranging process of the at least two ONTs; and receiving ranging responses of the at least two ONTs in the quiet window and calculating ranging results of the at least two ONTs according to the ranging responses of the at least two ONTs. The embodiments of the present invention further provide a ranging apparatus for a passive optical network and a passive optical network system.

## Description

### FIELD OF THE INVENTION

The present invention relates to the field of communications technologies, and in particular, to a ranging method, system, and apparatus for a passive optical network (Passive Optical Network, PON).

### BACKGROUND OF THE INVENTION

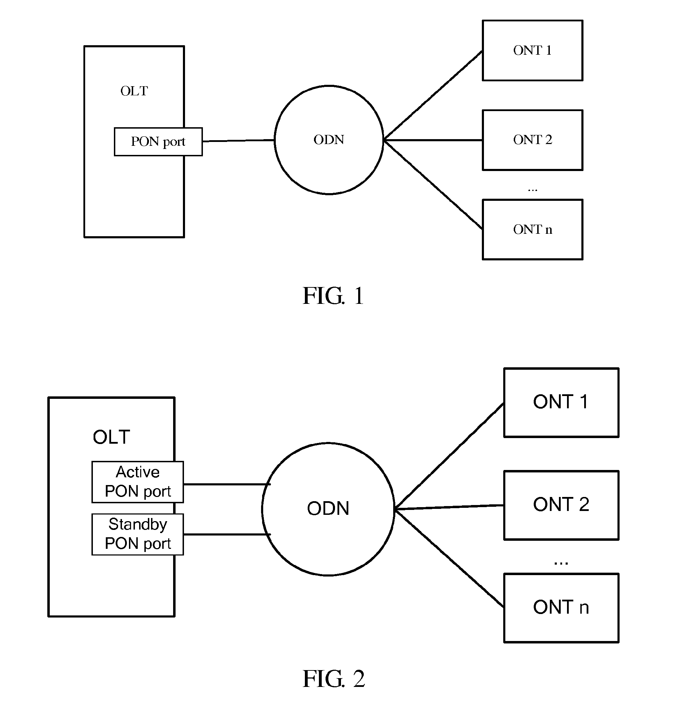

A PON system generally includes an optical line terminal (Optical Line Terminal, OLT) at a central office, an optical distribution network (Optical Distribute Network, ODN), and an optical network terminal (Optical Network Termination, ONT), as shown in FIG. 1. Multiple ONTs may connect to a same PON port of an OLT by using an ODN. As shown in FIG. 1, there are totally n ONTs: ONT 1 to ONT n.

Before an ONT that newly connects to a PON port works normally, an ONT activation process is required. The activation process is a series of operations performed between an OLT and the ONT before the ONT is allowed to connect to a PON system. An ONT activation process of a gigabit-capable passive optical network (Gigabit-capable Passive Optical Network, GPON) includes parameter learning, serial number (Serial Number, SN) acquiring, and ranging. An SN is a unique identifier of the ONT. In the activation process, there are mainly five ONT states:
1. Initial state: In this state, the ONT is enabled.
2. Wait state: After receiving a downlink data frame delivered by the OLT, the ONT enters the wait state. In this state, the ONT waits for the OLT to deliver a network configuration parameter.
3. Serial number acquiring state: After receiving the network configuration parameter delivered by the OLT, the ONT enters the serial number acquiring state. In this state, the ONT responds to a request of the OLT for acquiring a serial number.
4. Ranging state: After receiving an optical network unit identifier (Optical Network Unit Identifier, ONU-ID) allocated by the OLT, the ONT enters the ranging state. In this state, the ONT responds to a ranging request of the OLT. Ranging aims to measure a logical distance between the ONT and the OLT.
5. Work state: After receiving a ranging result sent by the OLT, the ONT enters the work state.
In this state, the ONT receives and sends data normally.

When the ONT is in the ranging state, the OLT allocates ranging bandwidth to the ONT and opens a quiet window (QuietWindow) to forbid other ONTs in the work state to send data. When the quiet window is opened, the OLT does not allocate bandwidth to other ONTs in the work state. Therefore, uplink sending of other ONTs is suspended when the quiet window is opened. The main purpose is to avoid that the OLT fails to normally receive a ranging response of a ranging ONT when an ONT in the work state sends data in the activation process of a newly connected ONT. Therefore, an impact on service forwarding of an ONT in the work state is greater if more quiet windows are opened by an OLT.

When multiple ONTs simultaneously connect to a GPON port of an OLT, the OLT initiates an activation process for the multiple newly connected ONTs, and the OLT performs ranging for the ONTs one by one. The OLT opens a quiet window when initiating a ranging request to an ONT. When the quiet window is opened, normally working ONTs that connect to the same GPON port are forbidden to send data. Upon correctly receiving a ranging response of a newly connected ONT, the OLT reallocates bandwidth to the ONTs in the normal work state and allows the ONTs in the normal work state to send data to the OLT.

However, when an existing ranging method is used, if n ONTs simultaneously connect to a GPON port of an OLT, the total ranging time is n times the ranging time of one ONT. This increases the activation time of a newly connected ONT and the service restoration time. The OLT opens a quiet window when initiating a ranging request to an ONT. Therefore, if the OLT needs to perform ranging for n ONTs, ONTs that connect to a same PON port and are in a normal work state are stopped from sending data for n times. This increases the service interruption time of an ONT in the normal work state.

### SUMMARY OF THE INVENTION

Embodiments of the present invention provide a ranging method, system, and apparatus for a passive optical network to improve efficiency of ranging performed for multiple ONTs, so as to reduce the activation time and service restoration time of a newly connected ONT and the service interruption time of an ONT in a normal work state.

An embodiment of the present invention first provides a ranging method for a passive optical network, including:
allocating ranging bandwidth to at least two optical network terminals ONTs and providing ranging bandwidth information for the at least two ONTs by using a same downlink frame;
opening a quiet window for suspending uplink sending of other ONTs in a ranging process of the at least two ONTs; and
receiving ranging responses of the at least two ONTs in the quiet window and calculating ranging results of the at least two ONTs according to the ranging responses of the at least two ONTs.

An embodiment of the present invention further provides a ranging apparatus for a passive optical network, including:
an allocation unit, configured to allocate ranging bandwidth to at least two optical network terminals ONTs and provide ranging bandwidth information for the at least two ONTs by using a same downlink frame;
a quiet window control unit, configured to open a quiet window for suspending uplink sending of other ONTs in a ranging process of the at least two ONTs;
a response receiving unit, configured to receive ranging responses of the at least two ONTs in the quiet window; and
a calculating unit, configured to calculate ranging results of the at least two ONTs according to the ranging responses of the at least two ONTs.

An embodiment of the present invention further provides a passive optical network system, including an optical line terminal OLT and multiple optical network terminals ONTs, where the OLT connects to the multiple ONTs by using an optical distribution network ODN in point-to-multipoint mode, and the OLT includes the preceding ranging apparatus.

The preceding technical solution has the following beneficial effects: Ranging bandwidth is allocated to at least two ONTs by using one downlink frame, and ranging responses of the at least two ONTs are received in a quiet window. In this way, efficiency of ranging performed for multiple ONTs can be improved by opening one quiet window to perform ranging for at least two ONTs, thereby reducing activation time and service restoration time of a newly connected ONT, and reducing service interruption time of an ONT in a normal work state.

### BRIEF DESCRIPTION OF THE DRAWINGS

To describe the technical solutions in the embodiments of the present invention more clearly, the following briefly introduces the accompanying drawings required for describing the embodiments. Apparently, the accompanying drawings in the following description show merely some embodiments of the present invention, and persons of ordinary skill in the art may still derive other drawings from these accompanying drawings without creative efforts.
FIG. 1 is a schematic networking diagram of a PON system;
FIG. 2 is a schematic networking diagram of a PON system with port protection;
FIG. 3 is a schematic flowchart of a ranging method for a passive optical network according to an embodiment of the present invention;
FIG. 4 is a schematic diagram of ranging bandwidth allocation and ranging response timing according to the method shown in FIG. 3;
FIG. 5 is a schematic flowchart of another ranging method for a passive optical network according to an embodiment of the present invention;
FIG. 6 is a schematic flowchart of another ranging method for a passive optical network according to an embodiment of the present invention;
FIG. 7 is a schematic structural diagram of a ranging apparatus for a passive optical network according to an embodiment of the present invention;
FIG. 8 is a schematic structural diagram of another ranging apparatus for a passive optical network according to an embodiment of the present invention;
FIG. 9 is a schematic structural diagram of another ranging apparatus for a passive optical network according to an embodiment of the present invention; and
FIG. 10 is a schematic structural diagram of another ranging apparatus for a passive optical network according to an embodiment of the present invention.

### DETAILED DESCRIPTION OF THE EMBODIMENTS

The following clearly and completely describes the technical solutions in the embodiments of the present invention with reference to the accompanying drawings in the embodiments of the present invention. Apparently, the described embodiments are merely a part rather than all of the embodiments of the present invention. All other embodiments obtained by persons of ordinary skill in the art based on the embodiments of the present invention without creative efforts shall fall within the protection scope of the present invention.

A ranging method provided in an embodiment of the present invention may be applied to a PON system shown in FIG. 1. The PON system may be a GPON system or an XGPON system, including an OLT located at a central office, multiple ONTs located at the user side, and an ODN located between the OLT and the ONTs. The OLT connects to the multiple ONTs by using the ODN in point-to-multipoint mode. For example, the ODN may include a passive optical splitter, the passive optical splitter may include at least one common end and multiple branch ends, where the common end may connect to a PON port (for example, a GPON port) of the OLT by using a trunk optical fiber, and each branch end may correspondingly connect to the ONU by using a branch optical fiber. The direction from the OLT to an ONT is a downlink direction, and the direction from an ONT to the OLT is an uplink direction. In the downlink direction, the OLT broadcasts downlink data to the ONTs in time division multiplexing mode, and each ONT receives only downlink data that carries an identifier thereof. In the uplink direction, the multiple ONTs send uplink data to the OLT in time division multiple access mode. To ensure that an ONT normally connects to the PON system, the OLT needs to perform ranging for the ONT when the ONT gets online. If multiple ONTs simultaneously get online, the OLT needs to perform ranging for the multiple ONTs.

To avoid service interruption caused by a PON port fault or a trunk optical fiber fault and implement port protection, as shown in FIG. 2, an OLT of a PON system may be arranged with an active PON port and a standby PON port, and an ODN of the PON system may further use a 2:N passive optical splitter; that is, the passive optical splitter may have two common ends, where one common end connects to the active PON port of the OLT by using a first trunk optical fiber, and the other common end connects to the standby PON port of the OLT by using a second trunk optical fiber. In a normal condition, only the active PON port of the OLT is working, and the standby PON port is in a standby state. When the active PON port or the first trunk optical fiber is faulty, the OLT may switch the service over to the standby PON port to restore ONT service forwarding. However, to ensure that an ONT normally connects to the standby PON port, the OLT needs to perform re-ranging for the ONT that originally connects to the active PON port during a switchover to the standby PON port. The ONT service forwarding can be performed only after the ranging is completed.

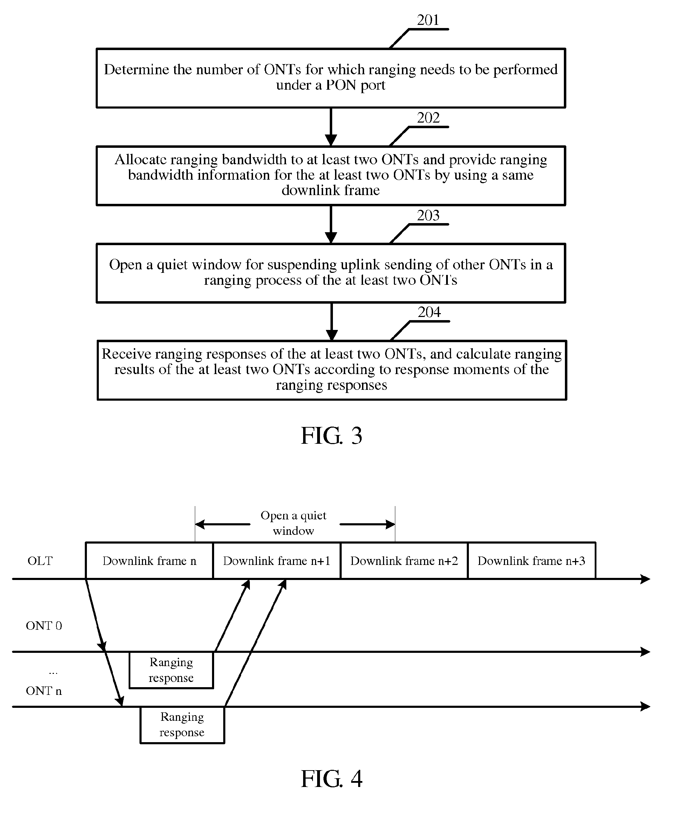

An embodiment of the present invention provides a ranging method for a passive optical network, as shown in FIG. 3, including:
201: An optical line terminal OLT determines the number of optical network terminals ONTs for which ranging needs to be performed under a PON port, where the number of the ONTs for which ranging needs to be performed is greater than or equal to two.
   Take a gigabit-capable passive optical network GPON system as an example. ONTs for which ranging needs to be performed under a PON port may be all ONTs that wait for getting online under a GPON port, and the number of the ONTs that wait for getting online is greater than or equal to two. For example, in the preceding step 201, the OLT may determine the number of ONTs that are of a same type and wait for getting online under the GPON port, and the number of ONUs that are of a same type and wait for getting online is greater than or equal to two.
   Optionally, in the preceding step 201, the determining, by an OLT, the number of optical network terminals ONTs for which ranging needs to be performed under a PON port may include: requesting, by the OLT by sending through the PON port a serial number request message to an ONT that newly connects to the PON port, the newly connected ONT to send a serial number of the ONT (that is, an ONT serial number); after receiving the request message, responding to, by the newly connected ONTs, the request message and returning serial numbers thereof to the OLT; and receiving, by the OLT, the serial numbers sent by the newly connected ONTs, and determining that all ONTs corresponding to the preceding serial numbers are ONTs for which ranging needs to be performed in a current ranging period, or, selecting, by the OLT, at least two ONTs from the ONTs corresponding to the preceding serial numbers as the ONTs for which ranging needs to be performed in a current ranging period.
   Alternatively, the preceding step 201 may occur when the OLT performs an active/standby port switchover. For example, when an active PON port or a trunk optical fiber is faulty, the OLT may need to switch the service of the active PON port over to a standby PON port; that is, the standby PON port acts as the active PON port after the switchover. To ensure that all ONTs that originally connect to the active PON port normally work under the standby PON port after the active/standby port switchover, the OLT needs to perform re-ranging for all ONTs that originally connect to the active PON port from the standby PON port. Therefore, in this case, the OLT may determine all ONTs that originally connect to the active PON port as the ONTs for which ranging needs to be performed in the current ranging period; alternatively, the OLT may select at least two ONTs from all ONTs that originally connect to the active PON port as the ONTs for which ranging needs to be performed in the current ranging period.
202: Allocate ranging bandwidth to at least two ONTs and provide ranging bandwidth information for the at least two ONTs by using a same downlink frame.
   Optionally, in the preceding step 202, the OLT may simultaneously allocate ranging bandwidth to at least two ONTs in a ranging period. For example, the OLT may allocate, in a same authorization period, the ranging bandwidth to all ONTs for which ranging needs to be performed under a same PON port. If the number of ONTs for which ranging needs to be performed is relatively large, ranging may be performed for the ONTs in two or more ranging periods. That is, the ranging bandwidth is allocated only to a part of the ONTs in one ranging period, and then the ranging bandwidth may be allocated to other ONTs in a next or subsequent ranging periods.
   Further, the OLT may bear the information (that is, ranging bandwidth information of the at least two ONTs) about the ranging bandwidth allocated to the at least two ONTs in a same downlink frame and send the downlink frame to the at least two ONTs. The downlink frame may include at least two ranging bandwidth fields. The at least two ranging bandwidth fields are separately used for bearing the ranging bandwidth information of the at least two ONTs. The ranging bandwidth information may include ONT identifier information (for example, an ONT serial number, an ONT ID, or other identifier information), a start time (Start Time), and a Stop time (Stop Time). In a specific embodiment, the length of ranging bandwidth allocated by the OLT to each ONT may be 13 bytes; that is, the length of a ranging response returned by the ONT may be 13 bytes. For example, the start time in the ranging bandwidth information may be X, and the end time is X+12, where X is time information indicated in bytes in an uplink frame. Alternatively, the ranging bandwidth information further includes ONT identifier information, a start time, and an authorized bandwidth length (Grant Size).
   In addition, the OLT may set a fixed time interval between ranging bandwidth of the at least two ONTs. The time interval is a time segment between ranging responses returned by the at least two ONTs to the OLT, and no ONT is authorized to make a ranging response or send another uplink message. Accordingly, in the downlink frame, an interval is set between adjacent ranging bandwidth fields. Alternatively, in an alternative embodiment, ranging bandwidth fields of the at least two ONTs are evenly distributed in the downlink frame, and no interval is set between adjacent ranging bandwidth fields. Alternatively, in another alternative embodiment, an interval between the ranging bandwidth fields of the at least two ONTs may be a random interval value. It should be noted that many solutions are available for bearing ranging bandwidth information of two or more ONTs in a downlink frame. The preceding three examples should not be construed as a limitation to this embodiment of the present invention.
203: Open a quiet window (Quiet Window) for suspending uplink sending of other ONTs in a ranging process of the at least two ONTs.
   The quiet window may be a time segment during which bandwidth authorization is not performed for uplink services of other ONTs and be used to suspend the uplink sending of other ONTs in the ranging process of the at least two ONTs. In a specific embodiment, the quiet window may correspond to the ranging bandwidth of the at least two ONTs. For example, the time length of the quiet window may be the total length of ranging bandwidth allocated by the OLT to the at least two ONTs; alternatively, the time length of the quiet window may also be the total length of ranging bandwidth of the at least two ONTs plus a necessary time interval (may be specified according to an interval set between adjacent ranging bandwidth fields in the downlink frame) between ranging processes of adjacent ONTs. A start time of the quiet window may correspond to a start time of ranging bandwidth of the first ONT among the at least two ONTs, and an end time of the quiet window may correspond to an end time of ranging bandwidth of the last ONT among the at least two ONTs. Certainly, when the quiet window is configured, an optical fiber link delay between an
   ONT and the OLT needs to be considered according to actual network needs.
204: Receive ranging responses of the at least two ONTs in the preceding quiet window, and calculate ranging results of the at least two ONTs according to response moments of the ranging responses.

In a specific embodiment, after receiving a downlink frame sent by the OLT, an ONT at the user side may acquire, according to ONT identifier information carried in a ranging bandwidth field in the downlink frame, ranging bandwidth information authorized by the OLT to the ONT (if the ONT fails to find corresponding ONT identifier information, it may learn that the OLT does not authorize it to make the ranging response in the current ranging period). Then, the at least two ONTs for which the OLT performs ranging bandwidth authorization may separately send, in the quiet window, ranging responses to the OLT according to the start time and the end time (or the authorized bandwidth length) of the ranging bandwidth allocated by the OLT. The OLT may receive the ranging responses of the at least two ONTs in a time segment of the quiet window and record the response moments of the ranging responses. Further, the OLT may calculate the ranging results of the at least two ONTs according to the response moments of the ranging responses of the at least two ONTs. For example, distances between the at least two ONTs and the OLT, an equalization delay (Equalization Delay, Eqd) of the at least two ONTs, or the like is calculated.

According to the solution of this embodiment of the present invention, ranging bandwidth is allocated to at least two ONTs by using one downlink frame, a quiet window is opened, and ranging responses of the at least two ONTs are received in a time segment of the quiet window. In this solution, ranging is performed for at least two ONTs by opening one quiet window, so that efficiency of ranging performed for multiple ONTs can be improved, thereby reducing activation time and service restoration time of a newly connected ONT, and reducing service interruption time of an ONT in a normal work state.

Further, the preceding method may further include sending a calculated ranging result to an ONT corresponding to the ranging result, where the ONT may adjust its time parameter according to the ranging result (for example, Eqd). In this embodiment, sending a ranging result to an ONT may enable the ONT to enter the work state. It should be noted that implementation at the OLT side is not affected if no ranging result is sent. Therefore, for an OLT, sending a ranging result is not a necessary process, and sending a ranging result should not be construed as a limitation to this embodiment.

Further, when applied in a scenario of an OLT port protection switchover, and before the determining, by an OLT, the number of ONTs for which ranging needs to be performed under a PON port, the preceding ranging method further includes detecting whether an active PON port or a trunk optical fiber is faulty. If a fault occurs, the active/standby switchover is performed for the PON ports of the OLT; that is, to switch the standby PON port as a new active PON port.

As shown in FIG. 4, FIG. 4 is a schematic diagram of ranging bandwidth allocation and ranging response timing according to an embodiment of the present invention. A horizontal arrow shown in FIG. 4 indicates a time axis, and downlink frames N to N+2 are shown on the OLT side. The preceding solution is used when step 202 is performed. In downlink frame N, bandwidth allocated to ONT 0 to ONT n is as follows: ONT 0: start time=X0, end time=X0+12,..., ONT n: start time=Xn, and end time=Xn+12. In a time segment when a quiet window is opened, ranging responses of ONT 0 to ONT n are received.

For better understanding of this embodiment of the present invention, the ranging method for a passive optical network that is provided by this embodiment of the present invention is further described in the following by specifically performing ranging for a newly connected ONT and performing ranging during an OLT port protection switchover separately.

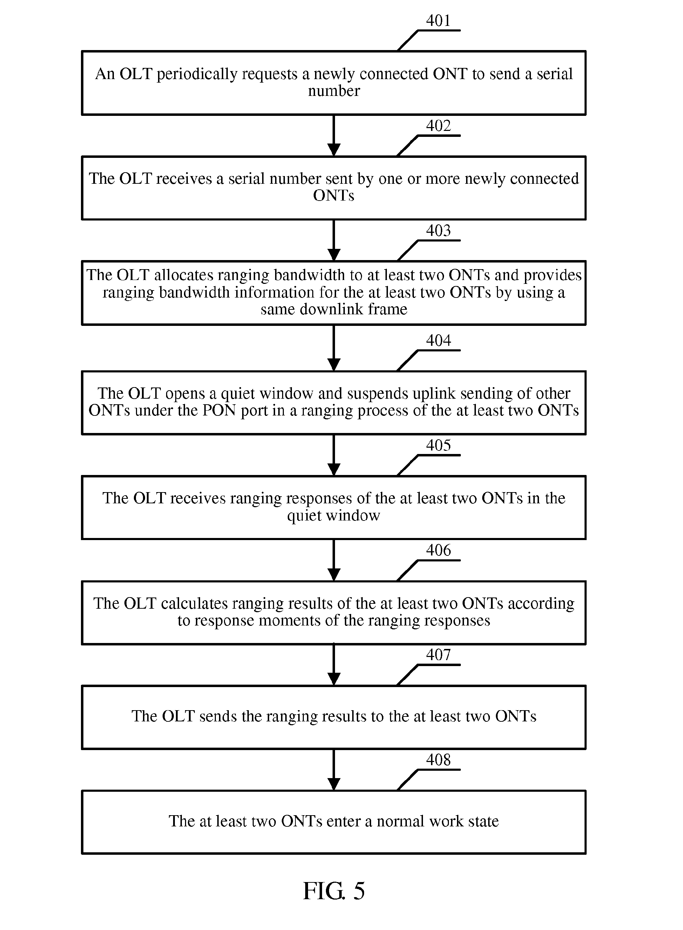

In a specific embodiment, the ranging method for a passive optical network may be applied to a scenario where an ONT is newly connected. As shown in FIG. 5, in the scenario where an ONT is newly connected, the ranging method for a passive optical network includes:
401: An OLT periodically requests an ONT that newly connects to a PON port to send an ONT serial number.
402: The OLT receives an ONT serial number sent by one or more newly connected ONTs.
403: When receiving ONT serial numbers sent by multiple ONTs, the OLT selects at least two ONTs for which ranging needs to be performed, separately allocates ranging bandwidth to the at least two ONTs, and provides ranging bandwidth information for the at least two ONTs by using a same downlink frame. For a solution of selecting an ONT for which ranging needs to be performed and a solution of allocating ranging bandwidth, reference may be made to the solution of the embodiment shown in FIG. 2.
404: The OLT opens a quiet window and suspends uplink sending of other ONTs under the PON port in a ranging process of the at least two ONTs.
405: The OLT receives ranging responses of the at least two ONTs in the quiet window.
406: The OLT calculates distances between the ONTs and the OLT according to response moments of ranging responses of the at least two ONTs to obtain ranging results.
407: The OLT separately sends the ranging results to the at least two ONTs for which ranging is performed.
408: The at least two ONTs enter a normal work state.

In addition, it should be understood that, in specific implementation, if the OLT has only one newly connected ONT in step 402, an existing solution may be used to allocate ranging bandwidth to the connected ONT and perform ranging, which will not be described herein again.

According to the solution of this embodiment of the present invention, multiple newly connected ONTs simultaneously connect to a same PON port, and time from ONT serial number responding to normal working can be effectively shortened. Assume that each ONT ranging requires 2 ms and 64 ONTs newly connect to the PON port. After the solution of the above-mentioned embodiment is used, the time for all ONTs to get online is shortened by 2*64 - 2 ms = 126 ms. In addition, because multiple ONTs that newly get online simultaneously connect to a same PON port, in the above-mentioned embodiment, impact on services of other ONTs under the same PON port is small. Assume that it takes 250 µs to open each quiet window and 64 ONTs newly connect to the PON port. In this embodiment of the present invention, impact on services of normally working ONTs is reduced by a maximum of 250 µs*64 - 250 µs = 15750 µs.

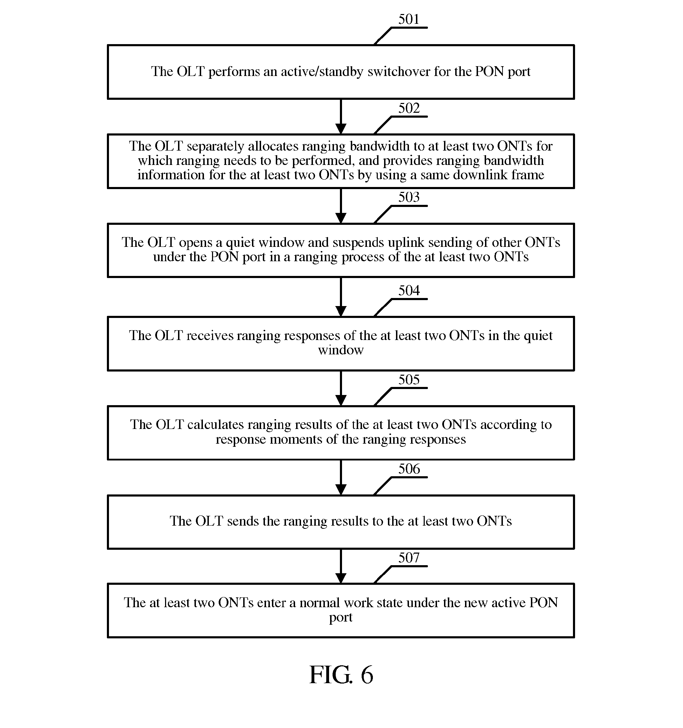

In another specific embodiment, the ranging method for a passive optical network may be applied to a scenario where an OLT performs a port protection switchover. As shown in FIG. 6, in the access scenario where an OLT performs a protection switchover, the ranging method for a passive optical network includes:
501: When an active PON port or a trunk optical fiber of the OLT is faulty, the OLT performs an active/standby switchover for the PON port to switch a standby PON port as a new active PON port, thereby switching the service over to the standby PON port.
502: The OLT determines an ONT for which ranging needs to be performed, separately allocates ranging bandwidth to at least two ONTs for which ranging needs to be performed, and provides ranging bandwidth information for the at least two ONTs by using a same downlink frame.
   For example, after the OLT switches over to the standby PON port, re-ranging needs to be performed for all ONTs that originally connect to the active PON port. The OLT may determine the preceding ONTs as ONTs for which ranging needs to be performed and allocate ranging bandwidth to all ONTs in one ranging period. Alternatively, the OLT may select a part of ONTs as ONTs for which ranging needs to be performed in a current ranging period and allocate ranging bandwidth to these ONTs, and ranging may be performed for other ONTs in a next ranging period.
503: The OLT opens a quiet window and suspends uplink sending of other ONTs under the PON port in a ranging process of the at least two ONTs.
504: The OLT receives ranging responses of the at least two ONTs in the quiet window.
505: The OLT calculates distances between the ONTs and the OLT according to response moments of ranging responses of the at least two ONTs to obtain ranging results.
506: The OLT separately sends the ranging results to the at least two ONTs for which ranging is performed.
507: The at least two ONTs enter a normal work state under the new active PON port.

According to the solution of this embodiment of the present invention, in a port protection scenario, when an active port is faulty, a standby port becomes a new active port, and ONT re-ranging time is short, and therefore service restoration time is short.

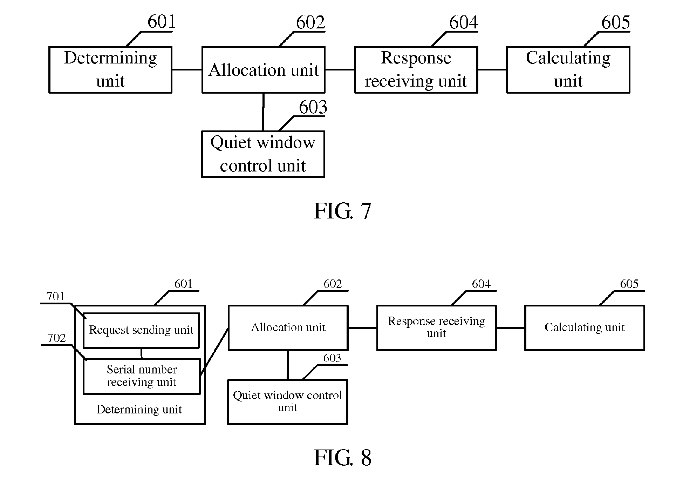

As can be seen from the description of the ranging method for a passive optical network according to the preceding embodiment, each step of the ranging method provided in the embodiment of the present invention may be performed on an optical line terminal OLT of a passive optical network. Based on the above-mentioned ranging method, an embodiment of the present invention further provides an optical line terminal, which includes a ranging apparatus shown in FIG. 7, where the ranging apparatus includes:
a determining unit 601, configured to determine the number of optical network terminals ONTs for which ranging needs to be performed under a PON port, where the number of the ONTs for which ranging needs to be performed is greater than or equal to two;
an allocation unit 602, configured to allocate ranging bandwidth to at least two ONTs and provide ranging bandwidth information for the at least two ONTs by using a same downlink frame;
a quiet window control unit 603, configured to open a quiet window for suspending other ONTs to send uplink services in a ranging process of the at least two ONTs;
a response receiving unit 604, configured to receive ranging responses of the at least two ONTs in the quiet window; and
a calculating unit 605, configured to calculate ranging results of the at least two ONTs according to the ranging responses (such as response moments of the ranging responses) of the at least two ONTs.

According to the solution of this embodiment of the present invention, ranging bandwidth is allocated to at least two ONTs by using one downlink frame, a quiet window is opened, and ranging responses of the at least two ONTs are received in a time segment of the quiet window. In this solution, ranging is performed for at least two ONTs by opening one quiet window, so that efficiency of ranging performed for multiple ONTs can be improved, thereby reducing activation time and service restoration time of a newly connected ONT, and reducing service interruption time of an ONT in a normal work state.

Optionally, the determining unit 601 is specifically configured to determine the number of all ONTs that wait for getting online, where the number of all ONTs that wait for getting online is greater than or equal to two. For example, the determining unit 601 may specifically be configured to determine the number of ONTs that are of a same type and wait for getting online, where the number of ONUs that are of a same type and wait for getting online is greater than or equal to two.

For example, in an embodiment, as shown in FIG. 8, the determining unit 601 includes a request sending unit 701 and a serial number receiving unit 702.

The request sending unit 701 is configured to request, by periodically sending a serial number request message to an ONT that newly connects to a PON port, the newly connected ONT to send an ONT serial number.

The serial number receiving unit 702 is configured to receive the serial number sent by the newly connected ONT and determine the ONT corresponding to the ONT serial number as an ONT for which ranging needs to be performed.

All ONTs corresponding to the ONT serial numbers received by the serial number receiving unit 702 may be determined as ONTs for which ranging needs to be performed; alternatively, at least two ONTs are selected from all ONTs corresponding to the serial numbers as ONTs for which ranging needs to be performed in a certain ranging period.

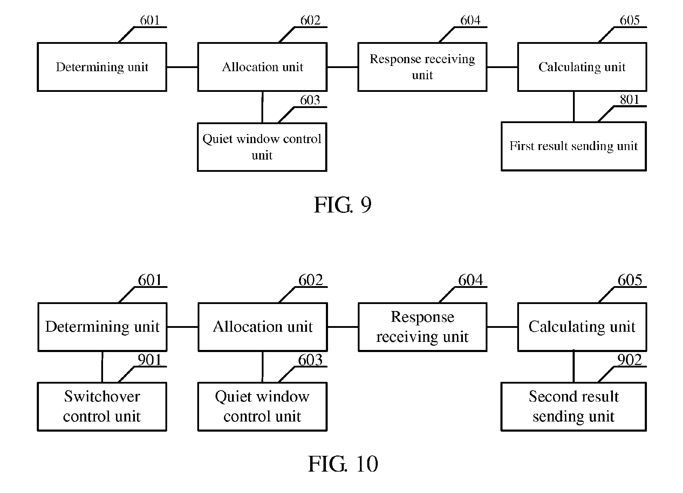

As shown in FIG. 9, in an embodiment, the ranging apparatus may further include:
a first result sending unit 801, configured to separately send ranging results of the at least two ONTs to ONTs corresponding to the ranging results.

Optionally, in another embodiment, as shown in FIG. 10, the ranging apparatus may further include:
a switchover control unit 901, configured to control, when an active PON port or a trunk optical fiber of an OLT is faulty, an active/standby switchover performed for the PON port of the OLT to switch a standby PON port as a new active PON port, thereby switching the service of the active PON port over to the standby PON port; and
a second result sending unit 902, configured to send ranging results of the at least two ONTs to ONTs corresponding to the ranging results after ranging result calculation is completed.

In the embodiment shown in FIG. 10, the determining unit 601 may specifically be configured to determine, after the OLT switches over to the standby PON port, all ONTs that originally connect to the active PON port as ONTs for which ranging needs to be performed; and the allocation unit 602 may specifically be configured to allocate ranging bandwidth to all ONTs in one ranging period.

Alternatively, the determining unit 601 may specifically be configured to select, after the OLT switches over to the standby PON port, a part of ONTs from all ONTs that originally connect to the active PON port as ONTs for which ranging needs to be performed in a current ranging period; and the allocation unit 602 may specifically be configured to allocate ranging bandwidth to the ONTs selected by the determining unit 601 in one ranging period so as to implement ranging for these ONTs. In addition, the determining unit 601 may further be configured to select a part or all of other ONTs as ONTs for which ranging needs to be performed in a next ranging period; and the allocation unit 602 may further be configured to allocate ranging bandwidth to the ONTs re-selected by the determining unit 601 in the next ranging period so as to implement ranging for the re-selected ONTs.

In the preceding embodiments, optionally, the downlink frame may include at least two ranging bandwidth fields, and each ranging bandwidth field is used for bearing ranging bandwidth information of one ONT. In addition, when separately bearing ranging bandwidth information of the at least two ONTs in the ranging bandwidth fields in the downlink frame, the allocation unit 602 may set a fixed interval between adjacent ranging bandwidth fields in the downlink frame; alternatively, the allocation unit 602 may evenly distribute ranging bandwidth fields of the at least two ONTs in the downlink frame and set no interval between adjacent ranging bandwidth fields; alternatively, the interval between the ranging bandwidth fields of the at least two ONTs may be set to a random interval value.

In an embodiment, the allocation unit 602 may include:
a bandwidth allocation sub-unit, configured to select at least two ONTs from the ONTs for which ranging needs to be performed and allocate ranging bandwidth to the selected at least two ONTs; and
a frame generation sub-unit, configured to bear ranging bandwidth information of the at least two ONTs in a same downlink frame and send the downlink frame to the at least two ONTs, where the downlink frame includes multiple ranging bandwidth fields, and each ranging bandwidth field is used for bearing ranging bandwidth information of one ONT.

In an embodiment, a quiet window opened by the quiet window control unit 603 may be a time segment during which bandwidth authorization is not performed for uplink services of other ONTs and be used to suspend uplink sending of other ONTs in a ranging process of the at least two ONTs. In a specific embodiment, the quiet window may correspond to the ranging bandwidth of the at least two ONTs. For example, the time length of the quiet window may be the total length of ranging bandwidth allocated by the OLT to the at least two ONTs; alternatively, the time length of the quiet window may also be the total length of ranging bandwidth of the at least two ONTs plus a necessary time interval (may be specified according to an interval set between adjacent ranging bandwidth fields in the downlink frame) between ranging processes of adjacent ONTs. A start time of the quiet window may correspond to a start time of ranging bandwidth of the first ONT among the at least two ONTs, and an end time of the quiet window may correspond to an end time of ranging bandwidth of the last ONT among the at least two ONTs.

According to the solution of this embodiment of the present invention, multiple newly connected ONTs simultaneously connect to a same PON port, and time from ONT serial number responding to normal working can be effectively shortened. Assume that each ONT ranging requires 2 ms and 64 ONTs newly connect to the PON port. After the OLT provided in this embodiment of the present invention is used, the time for all ONTs to get online is shortened by 2*64 - 2 ms = 126 ms. In addition, because multiple ONTs that newly get online simultaneously connect to a same PON port of the OLT, in the above-mentioned embodiment, impact on services of other ONTs under the same PON port is small. Assume that it takes 250 µs to open each quiet window and 64 ONTs newly connect to the PON port. In this embodiment of the present invention, impact on services of normally working ONTs is reduced by a maximum of 250 µs*64 - 250 µs = 15750 µs. In a port protection scenario, when an active port is faulty, a standby port becomes a new active port, and ONT re-ranging time is short, and therefore service restoration time is short.

Persons of ordinary skill in the art may understand that all or part of the steps of the methods in the embodiments may be implemented by a program instructing relevant hardware. The program may be stored in a computer readable storage medium. The storage medium may be a read-only memory, a magnetic disk, or an optical disk or the like.

The foregoing describes a ranging method for an optical network terminal and an optical line terminal that are provided in the embodiments of the present invention. In this specification, specific examples are used for illustrating principles and implementation manners of the present invention. The foregoing descriptions of the embodiments are merely used to help understand the methods and core ideas of the present invention. Meanwhile, persons of ordinary skill in the art may make modifications to the specific implementation manners and application scopes according to the idea of the present invention. In conclusion, the content of the specification should not be construed as a limitation to the present invention.

## Claims

1. A ranging method for a passive optical network PON, comprising:
allocating ranging bandwidth to at least two optical network terminals ONTs and providing ranging bandwidth information for the at least two ONTs by using a same downlink frame;
opening a quiet window for suspending uplink sending of other ONTs in a ranging process of the at least two ONTs; and
receiving ranging responses of the at least two ONTs in the quiet window and calculating ranging results of the at least two ONTs according to the ranging responses of the at least two ONTs.

2. The method according to claim 1, further comprising: determining the number of ONTs for which ranging needs to be performed under a PON port, wherein the number of ONTs for which ranging needs to be performed is greater than or equal to two.

3. The method according to claim 2, wherein the ONTs for which ranging needs to be performed are ONTs that newly connect to the PON port, and the determining the number of ONTs for which ranging needs to be performed under a PON port comprises:
requesting, by sending through the PON port a serial number request message to the ONT, an ONT that newly connects to the PON port to send an ONT serial number; and
receiving the ONT serial number sent by the newly connected ONT and determining the ONT corresponding to the ONT serial number as an ONT for which ranging needs to be performed.

4. The method according to claim 2, wherein the determining the number of ONTs for which ranging needs to be performed under a PON port comprises:
switching a service of an active PON port over to a standby PON port when the active PON port or a trunk optical fiber is faulty, and determining at least a part of ONTs that originally connect to the active PON port as ONTs for which ranging needs to be performed.

5. The method according to any one of claims 2 to 4, wherein the allocating ranging bandwidth to at least two optical network terminals ONTs and providing ranging bandwidth information for the at least two ONTs by using a same downlink frame comprises:
selecting at least two ONTs from the ONTs for which ranging needs to be performed and allocating ranging bandwidth to the selected at least two ONTs; and
bearing ranging bandwidth information of the at least two ONTs in a same downlink frame and sending the downlink frame to the at least two ONTs, wherein the downlink frame comprises multiple ranging bandwidth fields, and each ranging bandwidth field is used for bearing ranging bandwidth information of one ONT.

6. The method according to any one of claims 1 to 5, wherein the length of the quiet window is greater than or equal to the total length of the ranging bandwidth allocated to the at least two ONTs, a start time of the quiet window corresponds to a start time of the ranging bandwidth of the first ONT among the at least two ONTs, and an end time of the quiet window corresponds to an end time of the ranging bandwidth of the last ONT among the at least two ONTs.

7. A ranging apparatus for a passive optical network PON, comprising:
an allocation unit, configured to allocate ranging bandwidth to at least two optical network terminals ONTs and provide ranging bandwidth information for the at least two ONTs by using a same downlink frame;
a quiet window control unit, configured to open a quiet window for suspending uplink sending of other ONTs in a ranging process of the at least two ONTs;
a response receiving unit, configured to receive ranging responses of the at least two ONTs in the quiet window; and
a calculating unit, configured to calculate ranging results of the at least two ONTs according to the ranging responses of the at least two ONTs.

8. The apparatus according to claim 7, further comprising:
a determining unit, configured to determine the number of ONTs for which ranging needs to be performed under a PON port, wherein the number of the ONTs for which ranging needs to be performed is greater than or equal to two.

9. The apparatus according to claim 8, wherein the ONTs for which ranging needs to be performed are ONTs that newly connect to the PON port, and the determining unit comprises:
a request sending unit, configured to request, by sending through the PON port a serial number request message to the ONT, an ONT that newly connects to the PON port to send a serial number of the ONT; and
a serial number receiving unit, configured to receive the ONT serial number sent by the newly connected ONT and determine the ONT corresponding to the ONT serial number as an ONT for which ranging needs to be performed.

10. The apparatus according to claim 8, further comprising:
a switchover control unit, configured to switch a service of an active PON port over to a standby PON port when the active PON port or a trunk optical fiber is faulty; wherein:
the determining unit is specifically configured to determine ONTs that originally connects to the active PON port as ONTs for which ranging needs to be performed.

11. The apparatus according to any one of claims 8 to 10, wherein the allocation unit comprises:
a bandwidth allocation sub-unit, configured to select at least two ONTs from the ONTs for which ranging needs to be performed and allocate ranging bandwidth to the selected at least two ONTs; and
a frame generation sub-unit, configured to bear ranging bandwidth information of the at least two ONTs in a same downlink frame and send the downlink frame to the at least two ONTs, wherein the downlink frame comprises multiple ranging bandwidth fields, and each ranging bandwidth field is used for bearing ranging bandwidth information of one ONT.

12. The apparatus according to claims 7 to 11, wherein:
the length of the quiet window is greater than or equal to the total length of the ranging bandwidth allocated to the at least two ONTs, a start time of the quiet window corresponds to a start time of the ranging bandwidth of the first ONT among the at least two ONTs, and an end time of the quiet window corresponds to an end time of the ranging bandwidth of the last ONT among the at least two ONTs.

13. A passive optical network PON system, comprising an optical line terminal OLT and multiple optical network terminals ONTs, wherein the OLT connects to the multiple ONTs by using an optical distribution network ODN in point-to-multipoint mode, and the OLT comprises the ranging apparatus according to any one of claims 7 to 12.
